**Europäisches Patentamt**

**European Patent Office**

**Office européen des brevets**

(19)

(11) Veröffentlichungsnummer : **0 515 904 B1**

(12)                    ## EUROPÄISCHE PATENTSCHRIFT

(45) Veröffentlichungstag der Patentschrift :
05.01.94 Patentblatt 94/01

(51) Int. Cl.$^5$ : **B01J 37/10, B01J 29/28**

(21) Anmeldenummer : **92108044.6**

(22) Anmeldetag : **13.05.92**

(54) **Verfahren zur Modifizierung eines rein-anorganisch synthetisierten Zeoliths vom Pentasil-Typ.**

(30) Priorität : **29.05.91 DE 4117511**

(43) Veröffentlichungstag der Anmeldung :
**02.12.92 Patentblatt 92/49**

(45) Bekanntmachung des Hinweises auf die
Patenterteilung :
**05.01.94 Patentblatt 94/01**

(84) Benannte Vertragsstaaten :
**BE DE ES FR GB IT NL**

(56) Entgegenhaltungen :
**EP-A- 0 172 686**
**EP-A- 0 407 203**
**US-A- 4 443 554**
**US-A- 4 642 404**
**US-A- 4 919 790**

(73) Patentinhaber : **VAW Aluminium AG**
**Georg-von-Boeselager-Strasse 25**
**D-53117 Bonn (DE)**

(72) Erfinder : **Tissler, Arno, Dr.**
**Koernickestrasse 2,**
**W-5300 Bonn 1 (DE)**
Erfinder : **Thome, Roland, Dr.**
**Brüsseler Strasse 58,**
**W-Bonn 1 (DE)**
Erfinder : **Öhlmann, Gerhard, Prof. Dr.**
**Nicolai-Kirchplatz 5**
**O-1020 Berlin (DE)**
Erfinder : **Jerschkewitz, Hans-Georg, Dr.**
**Erich-Weinert-Strasse 79**
**O-1071 Berlin (DE)**
Erfinder : **Lischke, Günter, Dr.**
**Büchnerweg 48**
**O-1199 Berlin (DE)**
Erfinder : **Eckelt, Reinhard**
**Winckelmannstrasse 59**
**O-1197 Berlin (DE)**

(74) Vertreter : **Müller-Wolff, Thomas**
**HARWARDT NEUMANN, Patent- und**
**Rechtsanwälte, Postfach 14 55**
**D-53704 Siegburg (DE)**

EP 0 515 904 B1

## Beschreibung

Die Erfindung betrifft ein Verfahren zur Modifizierung eines rein anorganisch synthetisierten Zeoliths vom Pentasil-Typ mit einem $Si/Al_{Gerüst}$-Verhältnis von $\leqq 50$ durch

a) partielle Dealuminierung des Zeolithen durch eine Behandlung mit Wasserdampf unter Bildung von Extragerüst-Aluminium und

b) partielle Extraktion des Extragerüst-Aluminium durch Behandlung mit einer wäßrigen Säurelösung.

Derartige Zeolithe werden als katalytisch aktive Komponente für die Stoffwandlung organischer Verbindungen in der Gasphase verwendet. Als typische Reaktionen seien die Alkylierung von Aromaten sowie die Umwandlung von Methanol in Vergaserkraftstoffe bzw. in niedere Olefine mit geringer C-Zahl genannt.

Die Pentasil-Zeolithe sind wegen ihrer Porenstruktur und ihrer aciden Eigenschaften besonders als Katalysatormaterial geeignet. Günstige acide Eigenschaften, insbesondere für die o.g. Reaktionen besitzen H-Pentasil-Zeolithe mit einem großen $Si/Al_{Gerüst}$-Verhältnis von über 130 im Kristallgitter. Das $Si/Al_{Gerüst}$-Verhältnis wird bestimmt durch die Zahl der Si-Atome zur Zahl der Al-Atome, die sich in tetraedrischer Koordination im Zeolithgitter befinden.

Solche Zeolithe werden in der Regel in Gegenwart von strukturbildenden Zusätzen, sogenannten Templaten, üblicherweise quarternären Ammoniumbasen, synthetisiert.

Diese Synthesevariante hat eine Reihe von schwerwiegenden Nachteilen, die eine großtechnische und gleichzeitig umweltschonende Herstellung ausschließen. Die eingesetzten Template (meist Tetraalkylammonium-Verbindungen) sind toxisch, leicht entzündlich und stark korrosiv. Da die Synthese unter hydrothermalen Bedingungen, unter hohem Druck durchgeführt wird, ist ein Entweichen dieser Stoffe verfahrenstechnisch nicht völlig auszuschließen. Hierdurch besteht ein hohes Gefährdungspotential für die Mitarbeiter sowie für die nähere und weitere Umgebung der Produktionsstätte. Die bei den Synthesen anfallenden Abwässer enthalten ebenfalls diese Substanzen und müssen daher unter hohen Kosten entsorgt werden, um Umweltbelastungen auszuschließen. Ein weiterer Nachteil besteht darin, daß die im Gitter befindlichen organischen Anteile bei hohen Temperaturen ausgebrannt werden müssen: Dadurch gelangen die Template, beziehungsweise deren Abbau- und Folgeprodukte in die Abluft, aus der sie durch aufwendige Filterverfahren entfernt werden müssen. Dieses Calcinieren kann zusätzlich Gitterschädigungen im Zeolith verursachen, die ihn in seinen katalytischen und sorptiven Eigenschaften beeinträchtigen.

Eine Synthese ist auch ohne Templatzusatz möglich. Sie führt allerdings zu Produkten mit $Si/Al_{Gerüst}$-Verhältnis von <50. Diese sind als Katalysatorkomponenten für bestimmte organische Stoffwandlungen nur einsetzbar, wenn ihre zu hohe Acidität durch eine geeignete Modifizierung auf das erforderliche niedrige Niveau eingestellt wird.

Ganz allgemein kann die Acidität eines Pentasil-Zeoliths durch die Einführung von Drittelementen oder durch eine nachträgliche partielle Entfernung von Aluminium aus dem Anionengerüst (sogenannte Dealuminierung) sowie durch die Kombination beider Maßnahmen verringert werden.

In US 4,616,098 wird ein Bor-haltiger, in DE-OS 34 02 020, EP 100 119 und EP 102 117 werden Titanium bzw. Zirkonium und Hafnium enthaltende, in US 4,665,268 Magnesiumoxid- und Manganoxid-haltige sowie in DE-OS 28 31 630 Fe/Cr-haltige Pentasil-Zeolithe beschrieben. US 4,665,251, DD 123 446 und DD 272 040 haben die Präparation von phosphorhaltigen Zeolithen durch Kontaktierung mit anorganischen und organischen Phosphorverbindungen und deren Einsatz als Katalysatoren zum Gegenstand. Nachträgliche partielle Dealuminierung ist auf unterschiedlichen Wegen möglich. Bekannt ist die Entfernung von tetraedrischem Aluminium aus dem Zeolithgerüst durch eine chemische Behandlung. So wird in EP 244 056 und EP 279 568 die Kontaktierung des Zeoliths mit wäßrigen Lösungen von Fluoriden und anderen fluorhaltigen anorganischen Verbindungen zur chemischen Reaktion mit Teilen des Gerüst-Aluminiums und dessen anschließende Überführung in wasserlösliche und auswaschbare Verbindungen beschrieben.

In EP 123 449 und US 4,393,265 ist dargestellt, daß eine einfache Wasserdampfbehandlung bei erhöhter Temperatur eine geeignete Methode zur Verbesserung der katalytischen Eigenschaften von Zeolithen ist. Aus DD 272 040 ist bekannt, daß durch Wasserdampfeinwirkung bei Temperaturen zwischen 500 und 700 °C Extragerüst-Aluminium erzeugt wird.

Ein Nachteil der bekannten Verfahren besteht im hohen Präparationsaufwand, der mit der Einführung des Drittelementes verbunden ist. Der erreichbare Stabilitätsgewinn, der mit hohem Aufwand erkauft wird, bleibt häufig unzureichend.

Somit bestand die Aufgabe, auf der Basis templatfrei hergestellter Pentasil-Zeolithe mit möglichst einfachen Modifizierungsmaßnahmen und unter Verzicht auf die Einführung weiterer Elemente Katalysatorkomponenten zu gewinnen, die bei hoher Aktivität und Selektivität eine gute Langzeitstabilität besitzen.

Überraschend wurde gefunden, daß die Standzeit eines solchen zeolithischen Katalysators erhöht wird, wenn man einen templatfrei synthetisierten Pentasil-Zeolith mit einem $Si/Al_{Gerüst}$-Verhältnis <50, der im Wasserdampfstrom bei relativ niedriger Temperatur dealuminiert und anschließend zur partiellen Entfernung des dabei erzeugten Extragerüst-Aluminiums mit verdünnter Mineralsäure extrahiert worden war, erneut einer kurzzeitigen hydrothermalen Behandlung bei Temperaturen oberhalb 600 °C unterwirft.

Durch diesen Präparationsgang ist es möglich, ausgehend von einem H-Pentasil-Zeolithen mit niedrigem $Si/Al_{Gerüst}$-Verhältnis eine für die Katalyse optimale Konzentration acider Zentren bei gleichzeitig geringem Gehalt an dem die katalytischen Eigenschaften offenbar beeinträchtigenden Extragerüst-Aluminium zu erreichen. Es ist erforderlich, die Dealuminierung im Wasserdampfstrom bei relativ geringer Temperatur über eien längeren Zeitraum vorzunehmen, damit die Extrahierbarkeit eines möglichst großen Anteils des dabei erzeugten Extragerüst-Aluminiums gewährleistet wird. Die hydrothermale Behandlung bei höherer Temperatur im Anschluß an die Extraktion führt zu dem die katalytischen Eigenschaften fördernden hohen $Si/Al_{Gerüst}$-Verhältnis unter nur geringer Erhöhung des Gehaltes an Extragerüst-Aluminium.

Für die Herstellung der erfindungsgemäßen zeolithischen Katalysatorkomponente hat es sich als zweckmäßig erwiesen, einen Pentasil-Zeolith mit einem $Si/Al_{Gerüst}$-Verhältnis <50 in einem Wasserdampfstrom, dem auch ein geringer Anteil von Luft oder Inertgas beigemischt sein kann, bei Temperaturen zwischen 300 und 500 °C zu behandeln. Durch Variation der Behandlungsdauer kann der Dealuminierungsgrad eingestellt werden. Als günstig erwies sich eine Dealuminierung auf ein $Si/Al_{Gerüst}$-Verhältnis von 55 bis 120.

Das erreichte $Si/Al_{Gerüst}$-Verhältnis wird anhand der Ammonium-Austausch-Kapazität bestimmt. Dazu wird das Probenmaterial einem Ionenaustausch mit einer verdünnten Ammoniumsalzlösung unterworfen und im erschöpfend ausgetauschten Produkt der Ammoniumgehalt mit üblichen analytischen Methoden bestimmt. Er gibt, üblicherweise ausgedrückt in mmol/g, unmittelbar den Gehalt an Gerüst-Aluminium und damit an aciden Brönstedtzentren des Anionengerüstes an.

Als Folge der Entfernung von Aluminium aus dem Anionengerüst entsteht sog. Extragerüst-Aluminium, das sich in Form oxidischer Spezies in unterschiedlicher Verteilung im Porensystem des Zeolithgitters bzw. an dessen Oberfläche ablagert. So wird z. B., ausgehend von einem Pentasil-Zeolith mit einem $Si/Al_{Gerüst}$-Verhältnis von 18, entsprechend einem Gerüst-Aluminiumgehalt von 0,88 mmol/g, bei einer Dealuminierung auf ein $si/Al_{Gerüst}$-verhältnis von 70, Extragerüst-Aluminium in einer Menge von 0,65 mmol/g gebildet, d. h., es sind rund 74 % des anfänglichen Gerüst-Aluminiums in Extragerüst-Aluminium übergegangen.

Die extractive Behandlung eines solcherart dealuminierten Pentasil-Zeoliths mit verdünnter Mineralsäure hat zum Ziel, einen möglichst großen Teil des die katalytische Wirksamkeit offenbar behindernden Extragerüst-Aluminiums herauszulösen. Zweckmäßigerweise erfolgt die Extraktion mit verdünnter Salpetersäure bei Siedetemperatur unter Rückfluß, wobei ein wenigstens 5-facher Säureüberschuß, bezogen auf das herauszulösende Aluminium, anzuwenden ist. Es ist möglich, abhängig von den Bedingungen der Dealuminierung, bis zu 80 % des gebildeten Extragitter-Aluminiums zu extrahieren. Sorgfältiges Waschen mit destilliertem Wasser und Trocknung bei 120 °C schließen den Extraktionsprozeß ab. Die Menge des extrahierten Aluminiums kann in einfacher Weise durch komplexometrische Titration des Extraktes bestimmt werden.

Zur Verformung des Zeolithpulvers können die in der Katalysatorherstellung üblichen Methoden angewendet werden. Bevorzugt wird die Verstrangung mit einer amorphen pyrogenen Kieselsäure als Bindemittel. Dazu werden z. B. 65 Masseteile Zeolith und 35 Masseteile amorphe pyrogene Kieselsäure mit Wasser zu einer steifen Paste angeteigt und mittels einer Kolbenpresse zu Strängen von 1 bis 2 mm Durchmesser verformt, anschließend getrocknet und gebrochen. Die entscheidende Erhöhung der katalytischen Wirksamkeit des verstrangten Materials wird durch eine erneute, kurzzeitige Behandlung im Wasserdampfstrom bei höheren Temperaturen erzielt. Als Behandlungstemperatur wird der Bereich oberhalb 600 °C , zweckmäßig wenigstens 700 °C, gewählt und die Behandlungsdauer unterhalb 3 h, zweckmäßig bei 1 h, gehalten. Die dabei eintretende Dealuminierung erhöht das $Si/Al_{Gerüst}$-Verhältnis in Abhängigkeit von den Bedingungen auf 180 bis 280. Bei dem günstigen Wert von 220 wird, ausgehend von einem Wert des extrahierten Materials von z. B. 70, Extragerüst-Aluminium nur noch in einer Menge von 0,15 mmol/g erzeugt.

Es ist ein Vorteil des beschriebenen Verfahrens, daß templatfrei synthetisierte Pentasil-Zeolithe mit einem durch diese Herstellungsweise bedingten $Si/Al_{Gerüst}$-Verhältnis von <50 ohne Einführung von weiteren Elementen durch einfache Operationen modifiziert werden können, so daß sie für organische Stoffwandlungen in der Gasphase, die ein genau eingestelltes geringes und definiertes Aktivitätsniveau erfordern, als Katalysatoren mit einer hohen katalytischen Stabilität eingesetzt werden können.

Ein weiterer Vorteil der nach dem beschriebenen Verfahren hergestellten Katalysatoren ist, daß diese durch mehrstündiges Abbrennen des bei der katalytischen Reaktion abgelagerten Kohlenstoffes im Luftstrom bei erhöhter Temperatur regeneriert werden können und anschließend ohne signifikante Standzeitverminderung erneut katalytisch aktiv sind.

Das vorliegende Verfahren zur Modifizierung eines rein anorganisch synthetisierten Zeoliths vom Pentasil-Typ ist gekennzeichnet durch eine Wasserdampfbehandlung bei besonders tiefen Temperaturen, wobei die untere Grenze von 300 °C dadurch gegeben ist, daß eine genügende Menge von Extragerüst-Aluminium ge-

3

bildet wird. Die obere Grenze von 500 °C garantiert eine gute Extrahierbarkeit des Extragerüst-Aluminium durch die Mineralsäure. Die anschließende hydrothermale Behandlung des Zeolithen nach der partiellen Extraktion soll solange durchgeführt werden, bis sich ein Si/Al$_{Gerüst}$-Verhältnis von mindestens 130 einstellt. Erst oberhalb dieses Wertes von 130 ist eine ausreichende Standzeit des Katalysators bei der Stoffumwandlung organischer Verbindungen in der Gasphase gewährleistet.

Nach einer bevorzugten Ausführungsform des erfindungsgemäßen Verfahrens erfolgt die hydrothermale Behandlung im Anschluß an die Extraktion bei einer Temperatur zwischen 675 und 725 °C. Der erfindungsgemäße Bereich wurde so ausgewählt, daß einerseits eine ökonomische Verfahrensweise zur Herstellung des Si/Al$_{Gerüst}$-Verhältnisses ermöglicht wird und andererseits eine Zeolithstruktur erzielt wird, die frei von Unregelmäßigkeiten und Beschädigungen ist.

In einer weiteren Ausgestaltung der Erfindung soll die Wasserdampfbehandlung im Anschluß an die Extraktion über eine Zeitdauer von weniger als 3 Stunden erfolgen. Dies hat sich als zweckmäßig erwiesen, da oberhalb von 3 Stunden Unregelmäßigkeiten und Beschädigungen an der Zeolithstruktur des rein-anorganisch erzeugten Zeolithen vom Pentasil-Typ auftreten können.

Durch zahlreiche Versuche wurde festgestellt, daß bei einem Si/Al$_{Gerüst}$-Verhältnis von oberhalb 280 die Gesamtaktivität des Zeolithkatalysators bei der Stoffumwandlung organischer Verbindungen in der Gasphase für den großtechnischen Einsatz bei den in den Beispielen beschriebenen Reaktionen zu gering ist. Es wurde daher erfindungsgemäß das Si/Al$_{Gerüst}$-Verhältnis, das bei der hydrothermalen Behandlung im Anschluß an die Extraktion anfällt, auf einen Wert von max. 280 begrenzt.

Grundsätzlich sind alle wäßrigen Säurelösungen zur Entfernung des bei der Dealuminierung erzeugten Extragerüst-Aluminiums geeignet. In zahlreichen Versuchen hat sich allerdings folgende Auswahl von Säuren als besonders geeignet erwiesen:
Schwefelsäure, Salpetersäure, Salzsäure oder Mischungen derselben, wobei eine Säurekonzentration von 1 bis 3 N optimal ist, da unter diesen Bedingungen der Anteil des herausgelösten Gerüst-Aluminiums einen Maximalwert annimmt, ohne daß das Gerüst beschädigt wird. Grundsätzlich sind aber auch Säurekonzentrationen von 0,5 bis 6 möglich.

Die partielle Extraktion des Extragerüst-Aluminiums soll mit einer wäßrigen Säurelösung bei Temperaturen zwischen Raum- und Siedetemperatur durchgeführt werden. Dieses setzt voraus, daß der Zeolith nach der partiellen Dealuminierung auf eine geeignete Temperatur abgekühlt ist, damit ein Kontakt in wäßriger Phase ermöglicht wird.

In zahlreichen Versuchen wurde festgestellt, daß die Zeitdauer der Extraktion aus ökonomischen Gründen so gewählt wird, daß 40 bis 75 % des bei der Wasserdampfbehandlung erzeugten Extragerüst-Aluminiums extrahiert werden kann. Die Wasserdampfbehandlung sollte bei 300 bis 500 °C für 3 bis 250 Stunden durchgeführt werden, je nachdem, welches Verhältnis von Si : Al$_{Gerüst}$ angestrebt wird. Bei der Wasserdampfbehandlung zur partiellen Dealuminierung wird erfindungsgemäß ein Si/Al$_{Gerüst}$-Verhältnis von 55 bis 120 erreicht. Der extrahierbare Anteil des mit der Wasserdampfbehandlung erzeugten Extragerüst-Aluminiums kann bis zu 75 % des gesamten Aluminiumgehalts des Zeoliths betragen.

Die folgenden Beispiele erläutern das erfindungsgemäße Verfahren. Beispiele 1 bis 5 dienen als Vergleichsbeispiele. Beispiele 6, 7 und 8 basieren auf einem erfindungsgemäßen Katalysator. Eine Zusammenfassung der Beispiele ist im beigefügten Testschema dargestellt, wobei die Ergebnisse mit folgenden Parameter charakterisiert sind:

| | |
|---|---|
| S = | mittlere summare Selektivität der C2-C4-Olefine |
| Si/Al = | atomares Verhältnis von Si zu Gerüst-Aluminium |
| TOS (TIME ON STREAM) = | Standzeit oder Laufzeit des Katalysators bis zum Erscheinen von Dimethylether im Produktstrom |

Vergleichsbeispiel 1

Die H-Form eines templatfrei hergestellten Zeoliths vom Pentasil-Typ (Bezeichnung SH-27) mit einem Gesamtgehalt an Aluminium von 1,172 mmol/g, wovon 0,724 mmol/g als Gerüst-Aluminium und 0,448 mmol/g als Extragerüst-Aluminium vorliegen, wird mit einer amorphen pyrogenen Kieselsäure als Bindemittel angeteigt, verstrangt und bei 120 °C getrocknet. Die fertigen Stränge mit einem Durchmesser von 1,6 mm enthalten 65 Ma-% Zeolith.

12 ml des so hergestellten Katalysators werden in einem Festbett-Rohrreaktor mit einem gasförmigen Methanol-Stickstoff-Gemisch (Methanolkonzentration 50 Vol-%) unter einer Belastung LHSV von 1 ml$_{Methanol}$/ml$_{Katalysator}$*h bei einer Reaktionstemperatur von 560 °C beaufschlagt. Methanol wird während der Laufzeit von 8 Std. vollständig zu Kohlenwasserstoffen umgesetzt. Nach 8,75 Std. geht der Umsatz auf 98,1 % zurück (= Laufzeit = TOS); Dimethylether tritt unter den Reaktionsprodukten mit einem Masse-Anteil von 1,26 % auf. Im Verlaufe der Reaktion kommt es auf Kosten der anfangs im Produktspektrum sehr stark vertretenen gesättigten und aromatischen Komponenten zu einer Erhöhung des Anteils der niederen Olefine.

Methan liegt während der gesamten Reaktionsdauer oberhalb der 10-Masse-%-Grenze.

| Laufzeit (h) | | 0,25 | 1,25 | 2,75 | 8,00 | 8,75 | |
|---|---|---|---|---|---|---|---|
| Ethen | : | 14,43 | 22,16 | 21,31 | 17,95 | 19,43 | Masse-% |
| Propen | : | 9,54 | 15,23 | 15,99 | 16,28 | 17,21 | Masse-% |
| Butene | : | 3,99 | 7,41 | 13,66 | 15,27 | 12,15 | Masse-% |
| Methan | : | 12,62 | 11,69 | 13,24 | 18,75 | 23,84 | Masse-% |
| Ethan | : | 7,67 | 3,50 | 1,87 | 1,24 | 1,33 | Masse-% |
| Propan | : | 21,59 | 13,77 | 7,56 | 3,30 | 2,84 | Masse-% |
| Butane | : | 4,93 | 9,81 | 9,90 | 7,12 | 6,15 | Masse-% |
| $C_5$-Aliphaten | : | 0,0 | 0,0 | 0,0 | 3,54 | 0,62 | Masse-% |
| $C_6$-$C_9$-Aromaten | : | 16,25 | 13,64 | 12,50 | 9,93 | 8,95 | Masse-% |

Vergleichsbeispiel 2

SH-27 Zeolith wird 150 Std. bei 325 °C im gesättigten Wasserdampfstrom behandelt. Dabei tritt, wie aus der Ammonium-Austausch-Kapazität folgt, Dealuminierung bis zu einem $Si/Al_{Gerüst}$-Verhältnis von 57 ein. 12 ml des mit amorpher pyrogener Kieselsäure verstrangten Produktes werden unter den vorgenannten Bedingungen katalytisch getestet. Die Laufzeit beträgt 10 h. Das Kohlenwasserstoff-Produktgemisch enthält ausgedrückt als gewogenes Mittel über die gesamte Laufzeit:

Ethen : 18,05 Masse-%
Propen : 18,62 Masse-%
Butene : 11,94 Masse-%
Methan : 9,01 Masse-%
Ethan : 0,93 Masse-%
Propan : 3,58 Masse-%
Butane : 6,76 Masse-%
$C_{5\text{-}Aliphaten}$ : 2,96 Masse-%
$C_6$-$C_9$-Aromaten : 23,44 Masse-%

Vergleichsbeispiel 3

SH-27 Zeolith wird 66 h lang bei 470 °C im Wasserdampfstrom dealuminiert, wobei ein Si/Al-Verhältnis von 104 erreicht wird. Das entspricht einem Gehalt an Gerüst-Aluminium von 0,152 und an Extragerüst-Aluminium von 1,02 mmol/g. Nach Verstrangung mit amorpher pyrogener Kieselsäure wird bei 120 °C getrocknet und katalytisch getestet. Die Laufzeit beträgt 18 h. Die gemittelte Zusammensetzung der gebildeten Kohlenwasserstoffe ist folgende:

Ethen : 17,85 Masse-%
Propen : 23,64 Masse-%
Butene : 17,72 Masse-%
Methan : 4,52 Masse-%
Ethan : 0,63 Masse-%
Propan : 3,22 Masse-%
Butane : 5,83 Masse-%
$C_5$-Aliphaten : 5,02 Masse-%
$C_6$-$C_9$-Aromaten : 18,49 Masse-%

## Vergleichsbeispiel 4

SH-27 Zeolith wird 1 h lang bei einer Temperatur von 700 °C im gesättigten Wasserdampfstrom behandelt. Dabei tritt eine Verminderung des Gehaltes an Gerüstaluminium auf 0,107 mmol/g (entsprechend einem Si/Al$_{Gerüst}$-Verhältnis von 146) ein. Der Gehalt an Extragerüst-Aluminium beträgt 1,065 mmol/g. Das Dealuminierungsprodukt wird in der beschriebenen Weise mit einer amorphen pyrogenen Kieselsäure verstrangt.

12 ml dieses Katalysators werden unter den vorgenannten Bedingungen katalytisch getestet. Die Laufzeit beträgt 24 h; die mittlere Zusammensetzung der gebildeten Kohlenwasserstoffe ist folgende:

| | |
|---|---|
| Ethen | : 18,73 Masse-% |
| Propen | : 25,30 Masse-% |
| Butene | : 16,76 Masse-% |
| Methan | : 2,81 Masse-% |
| Ethan | : 0,45 Masse-% |
| Propan | : 3,34 Masse-% |
| Butane | : 6,92 Masse-% |
| $C_{5\text{-}Aliphaten}$ | : 4,76 Masse-% |
| $C_6$-$C_9$-Aromaten | : 15,61 Masse-% |

## Beispiel 5

30 g des gemäß Beispiel 3 dealuminierten Zeoliths werden 2 Std. mit 400 ml 2 N HNO$_3$ am Rückfluß gekocht, filtriert und gewaschen. Dabei werden 74,7 % des Extragerüst-Aluminiums extrahiert, so daß ein Restgehalt von 0,258 mmol/g verbleibt. Der extrahierte Zeolith wird mit amorpher pyrogener Kieselsäure verstrangt. 12 ml des so hergestellten Katalysators werden katalytisch getestet. Die Laufzeit beträgt 67 h; die mittlere Zusammensetzung der gebildeten Kohlenwasserstoffe ist folgende:

| | |
|---|---|
| Ethen | : 15,81 Masse-% |
| Propen | : 33,43 Masse-% |
| Butene | : 18,92 Masse-% |
| Methan | : 3,29 Masse-% |
| Ethan | : 0,35 Masse-% |
| Propan | : 2,00 Masse-% |
| Butane | : 4,27 Masse-% |
| $C_5$-Aliphaten | : 5,05 Masse-% |
| $C_6$-$C_9$-Aroamten | : 12,69 Masse-% |

## Beispiel 6

Ein gemäß Beispiel 2 dealuminierter Zeolith wird in der in Beispiel 5 beschriebenen Weise mit 2 N HNO$_3$ behandelt. Dabei werden 0,472 mmol/g, das sind 52,7 % des Gehaltes an Extragerüst-Aluminium extrahiert; der Si/Al$_{Gerüst}$-Wert bleibt unverändert. Das getrocknete Extraktionsprodukt wird mit einer amorphen pyrogenen Kieselsäure als Bindemittel angeteigt, verstrangt und bei 120 °C getrocknet. Die Stränge werden anschließend im Wasserdampfstrom bei 700 °C 1 h lang hydrothermal behandelt. Danach erreicht das Si/Al$_{Gerüst}$-Verhältnis einen Wert von 135. 12 ml des so hergestellten Katalysators werden katalytisch getestet. Die Laufzeit beträgt 62 h. Das Kohlenwasserstoff-Produktgemisch hat die folgende mittlere Zusammensetzung:

| | |
|---|---|
| Ethen | : 16,70 Masse-% |
| Propen | : 32,90 Masse-% |
| Butene | : 20,70 Masse-% |
| Methan | : 2,23 Masse-% |
| Ethan | : 0,27 Masse-% |
| Propan | : 2,40 Masse-% |
| Butane | : 5,38 Masse-% |
| $C_5$-Aliphaten | : 5,52 Masse-% |
| $C_6$-$C_9$-Aromaten | : 10,40 Masse-% |

## Beispiel 7

Der gemäß Beispiel 5 dealuminierte und extrahierte Zeolith wird nach Verstrangung mit einer amorphen pyrogenen Kieselsäure zusätzlich einer 1-stündigen hydrothermalen Behandlung bei 700 °C unterworfen. Dabei wird ein Si/Al$_{Gerüst}$-Verhältnis von 211 erreicht. Das entspricht einem Endgehalt an Gerüst-Aluminium von 0,077 und an Extragerüst-Aluminium von 0,336 mmol/g$_{Zeolithkomponente}$.

12 ml des so hergestellten Katalysators werden katalytisch getestet. Die Laufzeit beträgt 145 h; die mittlere Zusammensetzung der gebildeten Kohlenwasserstoffe war folgende:

| | |
|---|---|
| Ethen | : 15,51 Masse-% |
| Propen | : 36,52 Masse-% |
| Butene | : 21,52 Masse-% |
| Methan | : 2,01 Masse-% |
| Ethan | : 0,32 Masse-% |
| Propan | : 1,83 Masse-% |
| Butane | : 3,84 Masse-% |
| C$_5$-Aliphaten | : 5,47 Masse-% |
| C$_6$-C$_9$-Aromaten | : 8,45 Masse-% |

Beispiel 8

Nach Beendigung der Reaktion gemäß Beispiel 7 wird der Katalysator in situ durch Überleiten eines Luftstromes (v = 7,2 l/h) bei Zimmertemperatur beginnend unter stetiger Aufheizung bis 560 °C über einen Zeitraum von 4 Std. regeneriert. Dabei kommt es zum vollständigen Abbrennen des abgelagerten Kohlenstoffs. In der daran anschließenden katalytischen Testung wird eine Laufzeit von 132 Std. erreicht. Die Kohlenwasserstoff-Fraktion hat die folgende mittlere Zusammensetzung:

| | |
|---|---|
| Ethen | : 14,28 Masse-% |
| Propen | : 36,36 Masse-% |
| Butene | : 22,59 Masse-% |
| Methan | : 1,82 Masse-% |
| Ethan | : 0,29 Masse-% |
| Propan | : 1,82 Masse-% |
| Butane | : 4,30 Masse-% |
| C$_5$-Aliphaten | : 6,19 Masse-% |
| C$_6$-C$_9$-Aromaten | : 8,33 Masse-% |

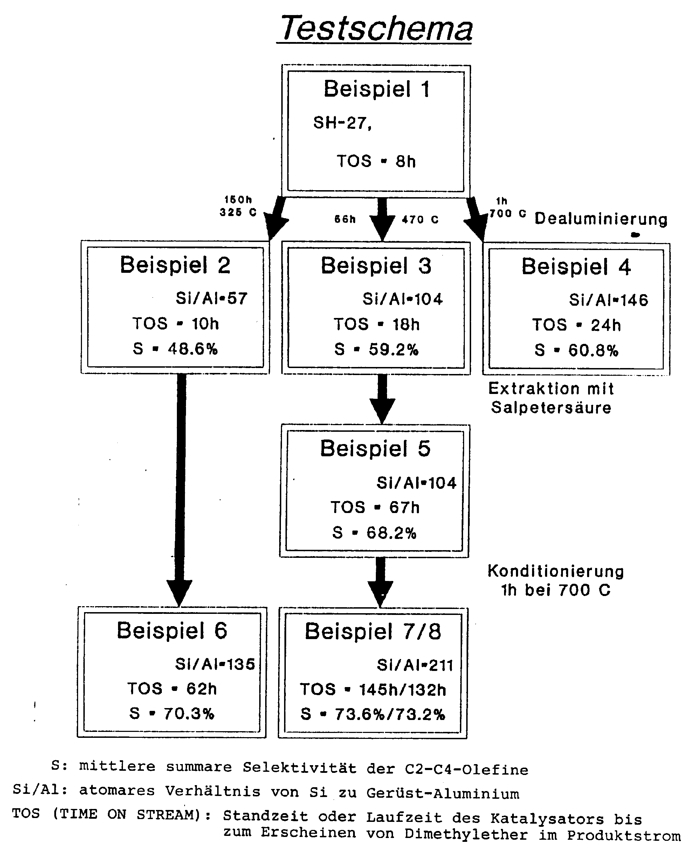

**Patentansprüche**

1. Verfahren zur Modifizierung eines rein anorganisch synthetisierten Zeoliths vom Pentasil-Typ mit einem Si/Al$_{Gerüst}$-Verhältnis von $\leqq$ 50 durch
   a) partielle Dealuminierung des Zeolithen durch eine Behandlung mit Wasserdampf unter Bildung von Extragerüst-Aluminium
   und
   b) partielle Extraktion des Extragerüst-Aluminium durch Behandlung mit einer wäßrigen Säurelösung, dadurch gekennzeichnet, daß die Wasserdampfbehandlung bei einer Temperatur zwischen 300 und 500 °C erfolgt und nach der partiellen Extraktion des Extragerüst-Aluminium eine kurzzeitige hydrothermale Behandlung des Zeolithen bei einer Temperatur von mindestens 600 °C solange durchgeführt wird, bis sich ein Si/Al$_{Gerüst}$-Verhältnis von mindestens 130 einstellt.

2. Verfahren nach Anspruch 1, gekennzeichnet dadurch, daß die hydrothermale Behandlung im Anschluß an die Extraktion bei Temperaturen zwischen 675 und 725 °C erfolgt.

3. Verfahren nach Anspruch 1 und 2, gekennzeichnet dadurch, daß die Wasserdampfbehandlung im Anschluß an die Extraktion über eine Zeitdauer von < 3 h erfolgt.

4. Verfahren nach Anspruch 1 bis 3, gekennzeichnet dadurch, daß durch die hydrothermale Behandlung im Anschluß an die Extraktion das Si/Al$_{Gerüst}$-Verhältnis auf max. 280 eingestellt wird.

5. Verfahren nach Anspruch 1 bis 4, gekennzeichnet dadurch, daß als wäßrige Lösung Schwefelsäure, Salpetersäure, Salzsäure oder deren Mischungen verwendet werden.

6. Verfahren nach Anspruch 1 bis 5, gekennzeichnet dadurch, daß eine Säurekonzentration von 0,1 bis 6 N angewendet wird.

## Claims

1. Process for modifying a synthetic completely inorganic zeolite of the pentasil type with an Si/structural-Al ratio of $\leqq 50$ by
   a) partial dealumination of the zeolite by treating with steam subject to the formation of extra-structural aluminium
   and
   b) partial extraction of the extra-structural aluminium by treating with an aqueous acid solution
   characterised in that the steam treatment is carried out at a temperature between 300 and 500 °C and after the partial extraction of the extra-structural aluminium a brief hydrothermal treatment of the zeolite at a temperature of at least 600 °C is carried out until such time as an Si/structural-Al ratio of at least 130 sets in.

2. Process according to Claim 1, characterised in that the hydrothermal treatment is carried out directly following the extraction at temperatures between 675 and 725 °C.

3. Process according to Claims 1 and 2, characterised in that the steam treatment is carried out over a period of < 3 h directly following the extraction.

4. Process according to Claims 1 to 3, characterised in that as a result of the hydrothermal treatment directly following the extraction the Si/structural-Al ratio is adjusted to a maximum of 280.

5. Process according to Claims 1 to 4, characterised in that by way of aqueous solution use is made of sulphuric acid, nitric acid, hydrochloric acid or mixtures thereof.

6. Process according to Claims 1 to 5, characterised in that an acid concentration of 0.1 to 6 N is used.

## Revendications

1. Procédé de modification d'une zéolithe de synthèse purement minérale du type pentasil ayant une proportion $Si/Al_{réseau}$ de $\leqq 50$ par
   a) désalumination partielle de la zéolithe par un traitement à la vapeur d'eau en formant de l'aluminium hors réseau et
   b) extraction partielle de l'aluminium hors réseau par traitement avec une solution acide, caractérisé en ce
   que le traitement à la vapeur d'eau a lieu à une température comprise entre 300 et 500°C et qu'après l'extraction partielle de l'aluminium hors réseau, on réalise un traitement hydrothermal court de la zéolithe à une température d'au moins 600°C jusqu'à ce qu'on obtienne une proportion $Si/Al_{réseau}$ d'au moins 130.

2. Procédé selon la revendication 1, caractérisé en ce que le traitement hydrothermal suivant l'extraction se fait à des températures comprises entre 675 et 725°C.

3. Procédé selon la revendication 1 et 2, caractérisé en ce que le traitement à la vapeur suit l'extraction pendant une durée < 3 heures.

4. Procédé selon la revendication 1 à 3 caractérisé en ce que par le traitement hydrothermal suivant l'extraction on ajuste la proportion $Si/Al_{réseau}$ à 280 maximum.

5. Procédé selon la revendication 1 à 4, caractérisé en ce qu'on utilise sous forme de solution aqueuse de l'acide sulfurique,de l'acide nitrique, de l'acide chlorhydrique ou leurs mélanges.

6. Procédé selon la revendication 1 à 5 caractérisé en ce qu'on utilise une concentration d'acide de 0,1 à 6N.

# *Testschema*

**Beispiel 1**

SH-27,

TOS = 8h

150h 325 C    66h    470 C    1h 700 C  Dealuminierung

**Beispiel 2**

Si/Al=57

TOS = 10h

S = 48.6%

**Beispiel 3**

Si/Al=104

TOS = 18h

S = 59.2%

**Beispiel 4**

Si/Al=146

TOS = 24h

S = 60.8%

Extraktion mit
Salpetersäure

**Beispiel 5**

Si/Al=104

TOS = 67h

S = 68.2%

Konditionierung
1h bei 700 C

**Beispiel 6**

Si/Al=135

TOS = 62h

S = 70.3%

**Beispiel 7/8**

Si/Al=211

TOS = 145h/132h

S = 73.6%/73.2%

S: mittlere summare Selektivität der C2-C4-Olefine

Si/Al: atomares Verhältnis von Si zu Gerüst-Aluminium

TOS (TIME ON STREAM): Standzeit oder Laufzeit des Katalysators bis
zum Erscheinen von Dimethylether im Produktstrom